# Europäisches Patentamt
## European Patent Office
## Office européen des brevets

(19)

(11) Veröffentlichungsnummer: **0 214 927**
**B1**

(12)

# EUROPÄISCHE PATENTSCHRIFT

(45) Veröffentlichungstag der Patentschrift:
30.08.89

(21) Anmeldenummer: 86810324.3

(22) Anmeldetag: 17.07.86

(51) Int. Cl.⁴: **B 23 B 31/16**

(54) Spannfutter für Bohr- und Meisselwerkzeuge.

(30) Priorität: 04.09.85 DE 3531512

(43) Veröffentlichungstag der Anmeldung:
18.03.87 Patentblatt 87/12

(45) Bekanntmachung des Hinweises auf die Patenterteilung: 30.08.89 Patentblatt 89/35

(84) Benannte Vertragsstaaten:
CH DE FR GB LI NL

(56) Entgegenhaltungen:
EP—A— 0 124 697
DE—A— 3 334 979
DE—C— 366 123
GB—A— 533 191

(73) Patentinhaber: HILTI Aktiengesellschaft
FL-9494 Schaan (LI)

(72) Erfinder: Manschitz, Erwin
Holzbachstrasse 7
D-8034 Germering (DE)

(74) Vertreter: Wildi, Roland
Hilti Aktiengesellschaft Patentabteilung
FL-9490 Schaan (LI)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Spannfutter für Bohr- und Meisselwerkzeuge, mit in einem Führungsrohr radial verschiebbar gelagerten Spannbacken und einer das Führungsrohr umgebenden, gegenüber dem Führungsrohr axial verschiebbaren Stellhülse für die Spannbacken, wobei die Stellhülse und die Spannbacken miteinander zusammenwirkende, gegenüber der Längsachse des Spannfutters geneigte Auflaufflächen aufweisen.

Spannfutter der oben genannten Art dienen zum Spannen von Werkzeugen, deren Einsteckenden meistens unterschiedliche Durchmesser aufweisen. Das radiale Verstellen der Spannbacken erfolgt durch axiales Verschieben einer Stellhülse. Dabei gleiten die Spannbacken über Auflaufflächen an der Stellhülse. Damit die Spannbacken sowohl bei der Bewegung nach innen wie auch bei der Bewegung nach aussen von der Stellhülse mitgenommen werden, sind spezielle Massnahmen erforderlich.

Bei bekannten Spannfuttern (DE-A 33 34 979) erfolgt dies dadurch, dass die Spannbacken durch Federelemente radial nach aussen gegen die Stellhülse gedrückt werden. Solche Federelemente können als zwischen den Spannbacken angeordnete Druckfedern oder die Spannbacken durchsetzender, radial federnder Ring ausgebildet sein. Da diese Massnahmen keine Zwangsführung der Spannbacken schaffen, ist es beispielsweise möglich, dass diese beim Verstellen hängen bleiben und dadurch Verschmutzungen wie Bohrklein oder Bohrstaub zwischen die Auflaufflächen gelangen können. Nebst dadurch hervorgerufener Verschleisserscheinungen führen solche Verschmutzungen zu einer mangelhaften Zentrierung des Bohrwerkzeuges.

Bei weiteren bekannten Bohrfuttern (DE-C 366 123) besteht eine Zwangsführung zwischen den Spannbacken und der Stellhülse dadurch, dass die Spannbacken im Führungsbereich einen T-förmigen Querschnitt aufweisen und in entsprechend ausgebildeten Führungsnuten der Stellhülse geführt werden. Insbesondere die Herstellung solcher T-förmiger Führungsnuten in der Stellhülse ist bei kleineren Abmessungen der Spannfutter mit hohen Kosten verbunden.

Der Erfindung liegt daher ausgehend vom Stand der Technik gemäß DE-A 33 34 979 die Aufgabe zugrunde, ein wirtschaftlich herstellbares Spannfutter zu schaffen, bei dem eine ausreichende Führung der Spannbacken gewährleistet ist.

Gemäss der Erfindung wird dies dadurch erreicht, dass die Spannbacken mit einem parallel zur Auflauffläche verlaufenden Schlitz versehen sind und die Stellhülse ein in den Schlitz eingreifendes Halteelement aufweist.

Ein solches Halteelement kann als zusätzliche Führung für die Spannbacken dienen. Dadurch kann sowohl die Ausbildung der Spannbacken als auch diejenige der Stellhülse wesentlich vereinfacht werden. Da die Halteelemente nur dem Verstellen der Spannbacken dienen und beim Spannen meist nicht beansprucht werden, können die Halteelemente und auch der Schlitz relativ klein dimensioniert werden. Dadurch ist auch die durch den Schlitz erfolgende Schwächung der Spannbacken gering.

Der Schlitz kann nur auf einer oder auch auf beiden Seiten der Spannbacken angeordnet werden. Aus herstellungstechnischen Gründen durchsetzt zweckmässigerweise der Schlitz die Spannbacken über die gesamte Breite. Ein die Spannbacken über die gesamte Breite durchsetzender Schlitz kann beispielsweise in einer einzigen Aufspannung der Spannbacken hergestellt werden. Unter Umständen können sogar mehrere Spannbacken miteinander bearbeitet werden, was besonders rationell ist und eine hohe Bearbeitungsgenauigkeit ermöglicht.

Für eine einfache Bearbeitung der Spannbacken ist es vorteilhaft, dass der Schlitz in den Spannbacken nach einer Stirnseite hin offen ist. Insbesondere ein sich über die gesamte Breite erstreckender Schlitz kann somit sehr rationell mittels eines Fräsblattes hergestellt werden. Ein nach einer Stirnseite hin offener Schlitz in den Spannbacken erleichtert auch das Einführen der Spannbacken unter Einfahren des Halteelementes in den Schlitz bei der Montage des Spannfutters.

Eine Verbindung des Halteelementes mit der Stellhülse kann im Prinzip durch Schweissen, Kleben oder Löten erfolgen. Für die Montage und Demontage des Spannfutters ist es zweckmässig, wenn das Halteelement die Stellhülse durchsetzt. Somit kann das Halteelement beispielsweise nach dem Einführen der Spannbacken in die Stellhülse eingesetzt werden. Zum Lösen der Spannbacken wird zunächst das Halteelement wieder entfernt. Die Verbindung des Halteelementes mit der Stellhülse kann beispielsweise über ein Gewinde oder durch einen Press- bzw Schiebesitz erfolgen.

Das Halteelement kann auf unterschiedliche Art ausgebildet werden. Eine vorteilhafte Ausführung besteht darin, dass das Halteelement als Stift von im wesentlichen der Breite des Schlitzes entsprechendem Durchmesser ausgebildet ist. Ein solcher Stift kann beispielsweise auch als Teil einer Schraube ausgebildet werden. Dies erleichtert das Einsetzen und Lösen des Halteelementes.

Eine weitere zweckmässige Ausführung besteht darin, das das Halteelement als Plättchen von im wesentlichen der Breite des Schlitzes entsprechender Dicke auszubilden. Eine solche Ausführung ist insbesondere dann zweckmässig, wenn sich der Schlitz in den Spannbacken über die gesamte Breite der Spannbacken erstreckt. Ein als Plättchen ausgebildetes Halteelement ergibt eine grössere Auflagefläche der Spannbacken am Halteelement und somit eine gleichmässigere Druckverteilung. Um ein Anfressen oder eine zu starke Abnützung zu vermeiden, kann das Halteelement aus Federstahl bestehen.

Die Erfindung soll nachstehend anhand der sie beispielsweise wiedergebenden Zeichnungen näher erläutert werden. Es zeigen :

Fig. 1 ein erfindungsgemässes Spannfutter, im Längsschnitt dargestellt ;

Fig. 2 einen Querschnitt durch das in Fig. 1 dargestellte Spannfutter, entlang der Linie II-II ;

Fig. 3 eine weitere Ausführung eines erfindungsgemässen Spannfutters, ebenfalls im Längsschnitt dargestellt ;

Fig. 4 einen Querschnitt durch das in Fig. 3 dargestellte Spannfutter, entlang der Linie IV-IV.

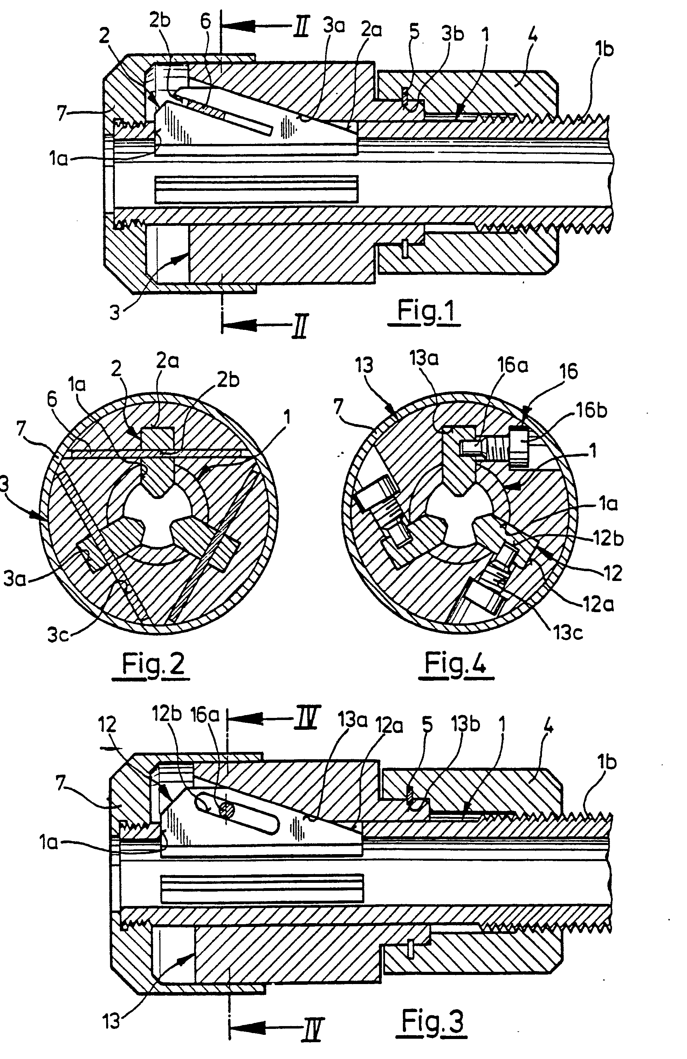

Das aus den Fig. 1 und 2 ersichtliche Spannfutter weist ein insgesamt mit 1 bezeichnetes Führungsrohr auf, das mit radial verlaufenden Durchtrittsöffnungen 1a für darin radial verschiebbar gelagerte, insgesamt mit 2 bezeichnete Spannbacken versehen ist. Die Spannbacken 2 können mittels einer auf dem Führungsrohr 1 verschiebbar gelagerten, insgesamt mit 3 bezeichneten Stellhülse radial verstellt werden. Die Spannbacken 2 und die Stellhülse 3 weisen miteinander zusammenwirkende, gegenüber der Längsachse geneigt angeordnete Auflaufflächen 2a, 3a auf. Das Führungsrohr 1 ist in seinem rückwärtigen Bereich mit einem Gewinde 1b versehen, auf welches eine damit in Eingriff stehende Gewindehülse 4 aufgeschraubt ist. Die Gewindehülse 4 ist mit der Stellhülse 3 über einen Sicherungsring 5 drehbar, jedoch axial fest verbunden. Beim Verdrehen der Gewindehülse 4 gegenüber dem Führungsrohr 1 wird somit die Stellhülse 3 axial verschoben und dadurch werden die Spannbacken 2 in radialer Richtung verstellt. Die Spannbacken 2 sind mit einem parallel zur Auflauffläche 2a verlaufenden Schlitz 2b versehen. Ein plättchenförmiges Halteelement 6, dessen Dicke im wesentlichen der Breite des Schlitzes 2b entspricht, greift in den Schlitz 2b ein. Somit befinden sich die Spannbacken dauernd in Wirkverbindung mit der Stellhülse 3.

Wie aus Fig. 2 ersichtlich ist, ragen die Halteelemente 6 seitlich in eine Ausnehmung 3c der Stellhülse 3. Die Spannbacken 2 sowie das vordere Ende der Stellhülse 3 werden durch eine mit dem Führungsrohr 1 verschraubte Abdeckhülse 7 abgeschlossen. Die Abdeckhülse 7 verhindert das Eindringen von Verschmutzung in den Führungsbereich der Spannbacken 2.

Das aus den Fig. 3 und 4 ersichtliche Spannfutter entspricht funktionell im wesentlichen der in den Fig. 1 und 2 dargestellten Ausführung. Identische Teile sind mit gleichen Bezugszeichen bezeichnet. Im Unterschied zu der in Fig. 1 und 2 dargestellten Ausführung weisen jedoch die insgesamt mit 12 bezeichneten Spannbacken einen Schlitz 12b auf, der sich nur über einen Teil der Breite der Spannbacken 12 erstreckt. Die insgesamt mit 16 bezeichneten Halteelemente sind als Zylinderschrauben mit einem Stift 16a und einem Kopf 16b ausgebildet. Der Durchmesser der Stiftes 16a entspricht der Breite des Schlitzes 12b in den Spannbacken 12. Der Kopf 16b der Halteelemente 16 ist in der insgesamt mit 13 bezeichneten Stellhülse versenkt. Diese Ausbildung ermöglicht ein einfaches Einsetzen und Entfernen der Halteelemente 16 bei der Montage bzw Demontage des Spannfutters.

## Patentansprüche

1. Spannfutter für Bohr- und Meisselwerkzeuge, mit in einem Führungsrohr (1) radial verschiebbar gelagerten Spannbacken (2, 12) und einer das Führungsrohr umgebenden, gegenüber dem Führungsrohr axial verschiebbaren Stellhülse (3, 13) für die Spannbacken, wobei die Stellhülse und die Spannbacken miteinander zusammenwirkende, gegenüber der Längsachse des Spannfutters geneigte Auflaufflächen (2a, 12a) aufweisen, dadurch gekennzeichnet, dass die Spannbacken (2, 12) mit einem parallel zur Auflauffläche (2a, 12a) verlaufenden Schlitz (2b, 12b) versehen sind und die Stellhülse (3, 13) ein in den Schlitz (2b, 12b) eingreifendes Halteelement (6, 16) aufweist.

2. Spannfutter nach Anspruch 1, dadurch gekennzeichnet, dass der Schlitz (2b) die Spannbacken (2) über die gesamte Breite durchsetzt.

3. Spannfutter nach Anspruch 1 oder 2, dadurch gekennzeichnet, dass der Schlitz (2b) in den Spannbacken (2) nach einer Stirnseite hin offen ist.

4. Spannfutter nach einem der Ansprüche 1 bis 3, dadurch gekennzeichnet, dass das Halteelement (6, 16) die Stellhülse durchsetzt.

5. Spannfutter nach einem der Ansprüche 1 bis 4, dadurch gekennzeichnet, dass das Halteelement (16) als Stift (16a) von im wesentlichen der Breite des Schlitzes (12b) entsprechendem Durchmesser ausgebildet ist.

6. Spannfutter nach einem der Ansprüche 1 bis 4, dadurch gekennzeichnet, dass das Halteelement (6) als Plättchen von im wesentlichen der Breite des Schlitzes (2b) entsprechender Dicke ausgebildet ist.

## Claims

1. A chuck for drilling and chiselling tools, having clamping jaws (2, 12) mounted so as to be radially displaceable in a guide tube (1) and an adjusting sleeve (3, 13), surrounding the guide tube and axially displaceable relative to the guide tube, for the clamping jaws, in which respect the adjusting sleeve and the clamping jaws have run-up surfaces (2a, 12a) which co-operate with one another and which are inclined relative to the longitudinal axis of the chuck, characterised in that the clamping jaws (2, 12) are provided with a slot (2b, 12b) extending parallel to the run-up surface (2a, 12a) and the adjusting sleeve (3, 13) has a retaining element (6, 16) engaging into the slot (2b, 12b).

2. A chuck according to claim 1, characterised in that the slot (2b) penetrates the clamping jaws (2) over the entire width.

3. A chuck according to claim 1 or 2, characterised in that the slot (2b) in the clamping jaws (2) is open towards a front end face.

4. A chuck according to one of claims 1 to 3, characterised in that the retaining element (6, 16) penetrates the adjusting sleeve.

5. A chuck according to one of claims 1 to 4, characterised in that the retaining element (16) is designed as a pin (16a) of a diameter corresponding substantially to the width of the slot (12b).

6. A chuck according to one of claims 1 to 4, characterised in that the retaining element (6) is designed as a platelet of a thickness corresponding substantially to the width of the slot (2b).

**Revendications**

1. Mandrin de serrage pour outils de forage et de burinage, comprenant des mâchoires de serrage (2, 12) montées dans un tube de guidage (1) de façon à pouvoir être déplacées dans le sens radial, et une douille de réglage (3, 13) pour les mâchoires de serrage qui entoure le tube de guidage et peut être déplacée axialement par rapport audit tube de guidage, la douille de réglage et les mâchoires de serrage présentant des surfaces d'arrêt (2a, 12a) coopérant les unes avec les autres et inclinées par rapport à l'axe longitudinal du mandrin de serrage, caractérisé en ce que les mâchoires de serrage (2, 12) sont munies d'une fente (2b, 12b) qui s'étend parallèlement à la surface d'arrêt (2a, 12a) et que la douille de réglage (3, 13) comprend un élément de retenue (6, 16) qui s'engage dans la fente (2b, 12b).

2. Mandrin de serrage selon la revendication 1, caractérisé en ce que la fente (2b) traverse les mâchoires de serrage (2) sur toute la largeur.

3. Mandrin de serrage selon l'une des revendications 1 ou 2, caractérisé en ce que la fente (2b) dans les mâchoires de serrage (2) est ouverte en direction de l'une des faces frontales.

4. Mandrin de serrage selon l'une des revendications 1 à 3, caractérisé en ce que l'élément de retenue (6, 16) traverse la douille de réglage.

5. Mandrin de serrage selon l'une des revendications 1 à 4, caractérisé en ce que l'élément de retenue (16) est réalisé sous la forme d'une tige (16a) dont le diamètre correspond sensiblement à la largeur de la fente (12b).

6. Mandrin de serrage selon l'une des revendications 1 à 4, caractérisé en ce que l'élément de retenue (6) est réalisé sous la forme d'une plaquette dont l'épaisseur correspond sensiblement à la largeur de la fente (2b).

Fig.1

Fig.2

Fig.4

Fig.3